# EUROPÄISCHE PATENTSCHRIFT

(11) **EP 3 523 559 B1**
(45) Veröffentlichungstag und Bekanntmachung des Hinweises auf die Patenterteilung: **19.10.2022**
(21) Anmeldenummer: 17781122.1
(22) Anmeldetag: 10.10.2017
(51) Int. Cl.: F16K 31/00, F16K 11/044, F16K 27/02

(54) **VENTILEINRICHTUNG**
VALVE DEVICE
DISPOSITIF DE SOUPAPE

(30) Priorität: 10.10.2016 DE 102016219630
(43) Veröffentlichungstag der Anmeldung: 14.08.2019
(73) Patentinhaber: Mack & Schneider GmbH, 70794 Filderstadt (DE)
(72) Erfinder: BACHOFER, Steffen, 70794 Filderstadt (DE)
(74) Vertreter: Clarenbach, Carl-Philipp
(86) Internationale Anmeldenummer: PCT/EP2017/075748
(87) Internationale Veröffentlichungsnummer: WO 2018/069280

(56) Entgegenhaltungen:
- EP-A2- 0 959 282
- EP-A2- 2 113 698
- DE-A1-102013 223 907
- DE-A1-102014 221 180
- JP-A- S59 151 678
- JP-A- S59 197 682
- JP-A- 2010 025 363
- JP-U- S61 191 580
- US-A1- 2004 232 249

## Beschreibung

Die Erfindung betrifft eine Ventileinrichtung, insbesondere für ein Kühlwassersystem eines Kraftfahrzeugs, mit einem Gehäuse, das einen Zulaufanschluss und einen ersten Ablaufanschluss und einen zweiten Ablaufanschluss aufweist, mit einem in dem Gehäuse verschiebbar gelagerten Ventil, wobei das Ventil einen zylinderförmigen Grundkörper aufweist, an dessen Enden jeweils ein Ventilelement angeordnet ist, um in einer ersten Schiebeendstellung des Ventils einen der Anschlüsse und in einer zweiten Schiebeendstellung des Ventils einen anderen der Anschlüsse zu verschließen, und mit einem ersten Federelement, welches das Ventil in Richtung der ersten Schiebeendstellung vorspannt, sowie mit einem thermisch aktivierbaren Aktuatorelement, das dazu ausgebildet ist, bei seiner Aktivierung das Ventil entgegen der Kraft des Federelements in Richtung der zweiten Schiebeendstellung zu verschieben.

Ventileinrichtungen der eingangs genannten Art sind aus dem Stand der Technik bekannt. So offenbart beispielsweise die Patentschrift EP 1 334 853 B2 eine gattungsgemäße Ventileinrichtung. Bei dieser ist das Ventil mit den daran angeordneten Ventilkörpern einstückig ausgebildet, wobei die Ventilkörper Dichtflächen aufweisen, die einander zuweisend beziehungsweise einander zugewandt an dem Ventil angeordnet sind, um mit zwischen den Ventilkörpern liegenden Ventilsitzen des Gehäuses zusammenzuwirken, wenn das Ventil in die erste oder die zweite Schiebeendstellung verschoben ist. Ein Federelement, welches das Ventil in die erste Schiebeendstellung vorspannt, ist dabei einer Stirnseite des Ventils zugeordnet, und zwischen dem Ventil und einer Stirnseite des Gehäuses axial verspannt beziehungsweise vorgespannt angeordnet. Damit beaufschlagt das Federelement direkt den Ventilkörper mit einer Zuspannkraft, welcher dadurch gegen den Ventilsitz im Gehäuse gedrängt wird. Dem anderen Ventilkörper ist das Aktuatorelement zugeordnet, welches bei thermischer Aktivierung der Federkraft entgegenwirkt. Dazu ist das Aktuatorelement mit einer Temperaturfühleranordnung verbunden, die ein Temperaturfühlermedium mit einem temperaturabhängigen Volumen aufweist, wobei eine temperaturbedingte Volumenänderung des Temperaturfühlmediums das steif ausgebildete Aktuatorelement entgegen der Kraft des Federelements bewegt.

Die bekannte Ventileinrichtung hat den Nachteil, dass die Montage und Herstellung kompliziert und kostenaufwendig ist. Insbesondere ist das einstückig ausgebildete Ventil nur dann montierbar, wenn das Gehäuse in einer Ebene parallel zur Schiebeachse des Ventils geteilt ist.

Die Offenlegungsschriften JP S59 151678 A, JP S59 197682 A, DE 10 2014 221 180 A1, JP S61 191580 U sowie JP 2010 025363 A und offenbaren jeweils gattungsgemäße Ventileinrichtungen mit in einem Gehäuse axial verschiebbar gelagerten Ventilelementen.

Der Erfindung liegt daher die Aufgabe zugrunde, eine Ventileinrichtung zu schaffen, welche eine verbesserte Montage gewährleistet, kompakt ausgebildet ist und geringe Herstellungskosten ermöglicht.

Die der Erfindung zugrundeliegende Aufgabe wird durch eine Ventileinrichtung mit den Merkmalen des Anspruchs 1 gelöst. Diese hat den Vorteil, dass aufgrund einer geschickten Ausbildung des Ventils sowie dessen Aktuatorik die Ventileinrichtung mit nur geringem Bauraum kostengünstig herstellbar ist. Erfindungsgemäß wird dies dadurch erreicht, dass das erste Federelement und das als zweites Federelement ausgebildete Aktuatorelement jeweils zwischen einem der Ventilelemente und einem von dem Gehäuse radial nach innen vorstehenden Lagersteg verspannt sind. Damit sind das Federelement und das Aktuatorelement parallel zu dem Ventil, insbesondere zu dem Grundkörper, und nicht in Reihe dazu geschaltet. Weil die Federelemente jeweils zwischen einem Ventilelement und dem Lagersteg verspannt sind, drängen sie das jeweilige Federelement von dem Lagersteg weg. Weil die Federelemente zwischen den Ventilelementen und dem Lagersteg liegen, sind sie kompakt in dem Gehäuse anordenbar und benötigen keinen zusätzlichen axialen Bauraum. Dadurch, dass das Ventil mehrteilig ausgebildet sein kann und insbesondere auch mehrteilig ausgebildet ist, mit dem Grundkörper als ein Teil und dem Ventilelementen als weitere Teile, ist eine einfache Montage der Ventileinrichtung ebenfalls gewährleistet.

Erfindungsgemäß ist vorgesehen, dass die Federelemente jeweils als Schraubenfeder ausgebildet und koaxial zu dem Grundkörper des Ventils angeordnet sind. Durch die Ausbildung als Schraubenfedern ist die koaxiale Anordnung ohne weiteres möglich, wobei der Grundkörper selbst dabei auch als Führung für die Schraubenfedern dient, sodass die Schraubenfedern unverlierbar an dem Ventil gehalten sind. Dadurch ist ein dauerhaft sicherer Betrieb der Ventileinrichtung auf einfache Art und Weise gewährleistet.

Erfindungsgemäß ist vorgesehen, dass der Lagersteg von einem in das Gehäuse eingesetzten Lagerring gebildet ist. Der Lagerring ist beispielsweise axial in das Gehäuse einsetzbar. Durch die separate Ausbildung des Lagerstegs von dem Gehäuse ist eine einfache Montage und Herstellung der Ventileinrichtung gewährleistet. Zweckmäßigerweise ist der Lagerring in dem Gehäuse fixiert, insbesondere formschlüssig arretiert, sodass die Lagerung des Ventils in dem Gehäuse definiert ist.

Insbesondere ist vorgesehen, dass der Lagerring zusammen mit dem Ventil als Vormontageeinheit ausgebildet ist. Durch die separate Ausbildung von Lagerring, Grundkörper und Ventilelementen ist eine einfache Montage der Vormontageeinheit gewährleistet. Durch das Hinzufügen des Lagerrings zu der Vormontageeinheit ist das Ventil insgesamt auf einfache Art und Weise in dem Gehäuse auch durch axiales Einstecken in eine Öffnung des Gehäuses möglich, sodass eine Trennebene oder Teilungsebene des Gehäuses insbesondere senkrecht zur Verschieberichtung des Ventils ausgebildet ist. So weist das Gehäuse bevorzugt einen becherförmiges Gehäuseelement auf, in dessen Boden einer der Anschlüsse ausgebildet ist, und in dessen Mantelwand ein weiterer der Anschlüsse ausgebildet ist, und auf das ein Gehäusedeckel aufsetzbar ist, welcher den verbleibenden Anschluss aufweist. Das Ventil wirkt dann mit den Anschlüssen im Boden sowie im Gehäusedeckel in Abhängigkeit seiner Schiebestellung zusammen. Hierdurch ist eine einfache Montage und Demontage, beispielsweise auch zu Wartungszwecken, möglich.

Erfindungsgemäß ist vorgesehen, dass der Lagerring eine Lageröffnung zur verschiebbaren Lagerung des Grundkörpers aufweist. In der Lageröffnung ist der Grundkörper also längsverschiebbar gelagert. Durch die Lageröffnung ist der Grundkörper radial sicher an dem Lagerring geführt und gehalten.

Weiterhin ist bevorzugt vorgesehen, dass die Lageröffnung mindestens zwei, insbesondere drei oder mehr radial nach innen vorstehende und in Umfangsrichtung voneinander beabstandet angeordnete Führungsstege für den Grundkörper aufweist. Durch die Führungsstege, die sich insbesondere axial erstrecken, wird erreicht, dass durch den Grundkörper und Lagerring zumindest abschnittsweise - in Umfangsrichtung gesehen - Freiräume entstehen, die beispielsweise von dem Fluid, zu dessen Beeinflussung die Ventileinrichtung genutzt wird, durchströmt werden können. Darüber hinaus wird gewährleistet, dass Verschmutzungen im Fluid durch die Lagerung des Grundkörpers in dem Lagerring hindurchströmen können, ohne dass sie zu einem Verklemmen des Grundkörpers in dem Lagerring beziehungsweise in der Lageröffnung führen. Dadurch ist die dauerhafte Funktionsfähigkeit der Ventileinrichtung gewährleistet.

Erfindungsgemäß ist vorgesehen, dass die Lageröffnung in einem zylinderförmigen und axial vorstehenden Lagerabschnitt des Lagerrings ausgebildet ist. Dadurch, dass der Lagerabschnitt von dem Lagerring axial vorsteht, wird eine verlängerte Lageröffnung für den Grundkörper geboten, sodass dieser sicher axial führbar ist, auch dann, wenn der Lagerring selbst - axial gesehen - schmal ausgebildet ist. Dadurch werden die Bauraumverhältnisse in dem Gehäuse optimal ausgenutzt.

Erfindungsgemäß ist vorgesehen, dass der Lagerabschnitt als Führungsabschnitt für die Schraubenfedern ausgebildet ist. Damit sind die Schraubenfedern an dem Lagerabschnitt selbst axial abschnittsweise geführt und insbesondere beabstandet zu dem beweglich gelagerten Grundkörper gehalten, sodass keine Verspannung oder Reibkontakt zwischen Schraubenfedern und Grundkörper in der Nähe des Lagerrings auftreten können. Dadurch wird insbesondere auch verhindert, dass sich keine der Schraubenfedern an der Lageröffnung mit dem Grundkörper verklemmt. Vorzugsweise weist der Lagerabschnitt beidseitig beziehungsweise an seinen Stirnseiten Zentrierfasen auf, welche das Aufschieben der Schraubenfedern erleichtern.

Erfindungsgemäß ist vorgesehen, dass der Lagersteg von einem in das Gehäuse eingesetzten Lagerring gebildet ist, die Lageröffnung in einem zylinderförmigen und axial vorstehenden Lagerabschnitt des Lagerrings ausgebildet ist, und dass der Lagerabschnitt als Führungsabschnitt für zumindest eine der als Schraubenfedern ausgebildeten und koaxial zu dem Grundkörper angeordneten Federelemente ausgebildet ist. Hierdurch ist eine vorteilhafte Vormontageeinheit realisierbar, die das Zusammenführen der Einzelteile, also insbesondere des Grundkörpers in die Lageröffnung des Lagerrings sowie das Aufschieben und sichere Führen der Schraubenfedern gewährleistet. Durch die Führungsabschnitte wird ein Verklemmen der Schraubenfedern an dem Grundkörper, dem Gehäuse und/oder an dem Lagersteg sicher verhindert. Einerseits ist durch die Führungsabschnitte eine vereinfachte Montage der Schraubenfedern gewährleistet, und andererseits wird durch die Führungsabschnitte beispielsweise ein direkter Kontakt zwischen Schraubenfeder und dem beweglich gelagerten Grundkörper verhindert, wodurch Reibungsverluste vermieden und ein sicherer Betrieb dauerhaft gewährleistet ist. Dadurch, dass der Lagerabschnitt an dem Lagerring ausgebildet ist, bietet der in die Lageröffnung des Lagerrings eingesetzte Grundkörper mit den vormontierten Schraubenfedern und dem Lagerring eine einfach in dem Gehäuse der Ventileinrichtung zu montierende Vormontageeinheit. Weiterhin ist bevorzugt vorgesehen, dass der Lagerring wenigstens einen Axialdurchbruch beabstandet zu der Lageröffnung aufweist. Zusätzlich zu der Lageröffnung sind in dem Lagerring also ein oder mehrere Axialdurchbrüche ausgebildet. Diese Axialdurchbrüche gewährleisten, dass Fluid frei zwischen den Ventilelementen strömen kann, sodass der gesamte Innenraum des Gehäuses zwischen Ventilelementen mit Fluid auffüllbar ist. Der Lagerring weist vorzugsweise mehrere sich radial erstreckende von dem Lagerabschnitt ausgehende Radialstege auf, welche an ihrem dem Gehäuse zugewandten Ende an diesem befestigt oder arretiert sind. In dem Umfangsabschnitt zwischen den benachbarten Stegen ist an jeweils einer der Axialdurchbrüche gebildet.

Weiterhin ist bevorzugt vorgesehen, dass der Lagerring an seinem Außenumfang einen durchgehenden Stützring zur Lagerung in dem Gehäuse aufweist. In diesem Fall sind dann insbesondere die Radialstege an ihrem äußeren Ende durch den Lagerring miteinander verbunden und an dem Gehäuse befestigt. Hierdurch ist eine stabile und sichere Führung des Ventils in dem Gehäuse gewährleistet, wobei ein geringes Gewicht und eine leichte Herstellbarkeit gewährleistet sind. Alternativ kann der Lagerring auch in der Form einer Lagerscheibe ausgebildet sein, welche mehrere Axialdurchbrüche, beispielsweise in Form von Durchbohrungen oder dergleichen aufweist, die insbesondere gleichmäßig über den Umfang verteilt angeordnet sind.

Weiterhin ist bevorzugt vorgesehen, dass die Ventileinrichtung zwei Ventilkörper aufweist, die jeweils ein elastisch verformbares Dichtelement, insbesondere einen Dichtring aufweisen. Durch das elastisch verformbare Dichtelement wird ein sicheres Abdichten des jeweiligen Abschlusses in der jeweiligen Schließendstellung des Ventils sicher gewährleistet. Die Ventilkörper selbst sind bevorzugt aus einem starren Material, insbesondere aus Kunststoff gefertigt, um die sichere Führung des dichtenden Dichtelements zu gewährleisten.

Vorteilhafterweise weisen die Ventilkörper jeweils einen sich über ihren Umfang erstreckende Ringnut auf, in welcher das jeweilige Dichtelement gehalten ist. Dies wird durch eine sichere Arretierung des Dichtelements an dem Ventilkörper formschlüssig gewährleistet.

Gemäß einer bevorzugten Weiterbildung der Erfindung ist außerdem vorgesehen, dass einer der Ventilkörper dem ersten Ablaufanschluss und der andere der Ventilkörper dem zweiten Ablaufanschluss zugeordnet ist. Damit ist der Zulaufanschluss ventilfrei und das in das Gehäuse beziehungsweise in die Ventileinrichtung einlaufende Fluid kann ungehindert in den Innenraum eindringen. Je nach dem, in welcher Schließendstellung sich das Ventil befindet, wird das Fluid dann durch einen Ablaufanschluss oder durch den anderen Ablaufanschluss aus dem Gehäuse ausgeleitet.

Besonders bevorzugt ist das Gehäuse T-förmig ausgebildet, wobei der Zulaufanschluss zwischen, insbesondere mittig zwischen den Ablaufanschlüssen in das Gehäuse mündet. Dadurch mündet der Zulaufanschluss direkt in den Zwischenraum zwischen den Ventilen und das einströmende Fluid wird dann in Abhängigkeit der Schließstellung des Ventils in die eine oder die andere Richtung weitergeleitet.

Das zweite Federelement ist bevorzugt aus einer Formgedächtnislegierung gefertigt. Dadurch erhält das zweite Federelement seine thermische Aktivierbarkeit. Sobald eine vorgebbare Grenztemperatur überschritten ist, reagiert das Formgedächtnis-Federelement und dehnt sich aus, sodass seine Arbeitskraft die Federkraft des ersten Federelements übersteigt, sodass das Ventil entgegen der Kraft des ersten Federelements in die zweite Schiebeendstellung verlagert wird. Dadurch ist ein temperaturabhängiges Schalten der Ventileinrichtung auf einfache Art und Weise gewährleistet. Sinkt die Temperatur unter den Grenzwert oder unterhalb eines zweiten Grenzwerts, so kann das zweite Federelement durch das erste Federelement wieder komprimiert werden und das Ventil in die erste Schließendstellung verlagert werden.

Im Folgenden soll die Erfindung anhand der Zeichnung näher erläutert werden. Dazu zeigen
- Figur 1: eine Ventileinrichtung in einer vereinfachten Längsschnittdarstellung,
- Figur 2: einen Lagerring in einer perspektivischen Darstellung und
- Figur 3: die Ventileinrichtung in einer Detail-Querschnittsdarstellung.

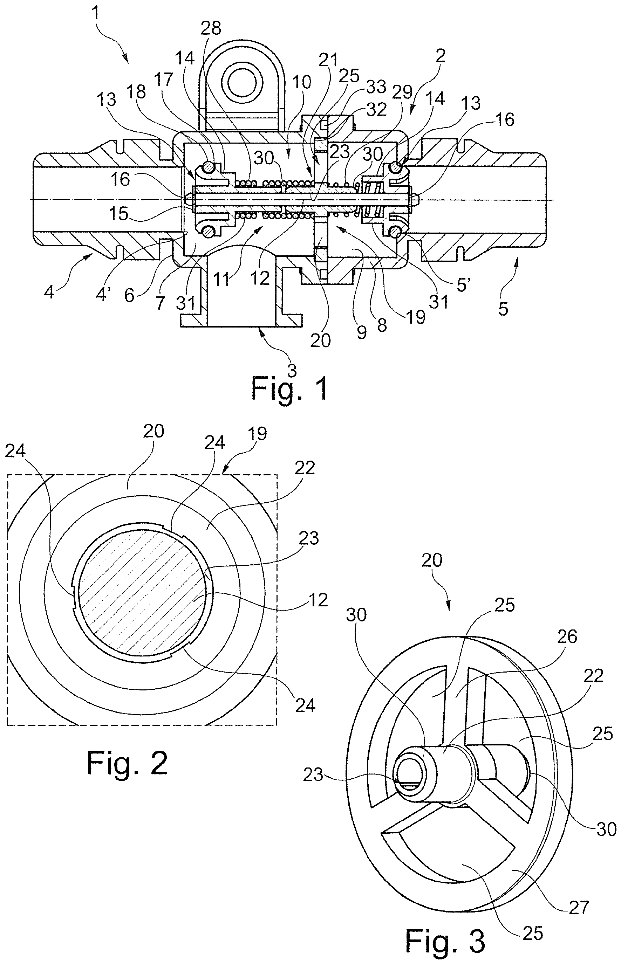

Figur 1 zeigt in einer vereinfachten Längsschnittdarstellung eine Ventileinrichtung 1, die als Thermoumschaltventil für den Wasserkreislauf eines Kraftfahrzeugs ausgebildet ist. Durch die Ventileinrichtung wird in Abhängigkeit der Temperatur des durch die Ventileinrichtung 1 geförderten Fluids das Fluid entweder in einen ersten oder in einen zweiten Kreislauf gefördert.

Dazu weist die Ventileinrichtung 1 ein mehrteiliges Gehäuse 2 auf, das einen Zulaufanschluss 3, einen ersten Ablaufanschluss 4 und einen zweiten Ablaufanschluss 5 aufweist. Das Gehäuse ist T-förmig ausgebildet, wobei die Ablaufanschlüsse 4 und 5 miteinander fluchtend an dem Gehäuse 2 ausgebildet sind, während der Zulaufanschluss 3 zwischen den Ablaufanschlüssen 4 und 5 senkrecht dazu in das Gehäuse 2 mündet. Das Gehäuse 2 ist gemäß dem vorliegenden Ausführungsbeispiel zweiteilig ausgebildet, wobei ein erster Gehäuseteil 6 becherförmig ausgebildet ist, um eine Kammer 7 zu bilden, in welche die Anschlüsse 3 und 4 münden. Die Anschlüsse 3 und 4 sind somit an dem Gehäuseteil 6 ausgebildet. Die Kammer 7 wird durch einen Gehäusedeckel 8, der das zweite Teil des Gehäuses 2 bildet, verschlossen, wobei der Gehäusedeckel 8 ebenfalls becherförmig ausgebildet ist, um eine Kammer 9 zu bilden, die im montierten Zustand zusammen mit der Kammer 7 gemeinsam eine Ventilkammer 10 der Ventileinrichtung 1 bildet. Außerdem ist an dem Gehäusedeckel 8 der zweite Ablaufanschluss 5 ausgebildet, der fluchtend beziehungsweise gegenüberliegend zu dem ersten Ablaufanschluss 4 angeordnet beziehungsweise ausgerichtet ist.

In der Ventilkammer 10 ist ein längsverschiebliches beziehungsweise axial verschiebbar gelagerten Ventil 11 angeordnet, das entweder die Ablauföffnung 4 oder die Ablauföffnung 5 verschließt, je nach dem in welcher axialen Schiebeendstellung sich das Ventil 11 befindet.

Das Ventil 11 weist einen zylinderförmigen Grundkörper 12 auf, dessen Länge in etwa der Längserstreckung der Ventilkammer 10 entspricht. Vorliegend ist der Grundkörper 12 etwas länger ausgebildet, sodass er bereichsweise in die Anschlüsse 4 und 5 hineinragt, zumindest wenn er sich in einer Schiebeendstellung, die später näher erörtert wird, befindet.

Auf dem Grundkörper 12 ist endseitig jeweils ein Ventilelement 13 angeordnet. Jedes der Ventilelemente 13 weist einen auf dem Grundkörper angeordneten Ventilkörper 14 auf, der insbesondere auf den Grundköper 12 axial aufgeschoben ist. Jedem der Ventilkörper 14 ist ein Sicherungsring 15 zur axialen Arretierung des Ventilkörpers 14 in Richtung des jeweiligen Endes des Grundkörpers 12 zugeordnet. Der Sicherungsring 15 ist insbesondere als Spannring ausgebildet und in jeweils einer Umfangsnut 16 gehalten.

Jeder der Ventilkörper 14 weist außerdem eine sich über seinen Umfang erstreckende Ringnut 17 auf, in welcher ein elastisch verformbarer Dichtring 18, insbesondere O-Ring, derart angeordnet ist, dass er dichtend mit einem jeweiligen Ventilsitz 4', 5' des dem Gehäuses 2 zum Verschließen des ihm jeweils zugeordneten Anschluss 4 oder 5 zusammenwirken kann. Die Ventilelemente 13 sind dabei derart auf dem Grundkörper 12 angeordnet, dass ihr maximaler Abstand zueinander kleiner ist als der Abstand der in dem Gehäuse 2 ausgebildeten Ventilsitze 4' und 5' der Ablauföffnung 4, 5, sodass jeweils nur eines der Ventilelemente 13 mit einem der Ventilsitze 4' oder 5' zusammenwirken kann. Damit ist gewährleistet, dass zumindest einer der Ablaufanschlüsse 4 oder 5 geöffnet ist, unabhängig von der Schiebestellung des Ventils 11.

Dem Grundkörper 12 ist weiterhin zwischen den Ventilkörpern 14 ein Linearlager 19 zugeordnet. Das Linearlager wird von einem als Lagerring 20 ausgebildeten Lagersteg 21, der sich radial von dem Gehäuse 2 nach innen in die Ventilkammer 10 erstreckt, gebildet.

Figur 2 zeigt den Lagerring 20 in einer perspektivischen Darstellung. Der Lagerring 20 weist mittig einen Lagerabschnitt 22 auf, der axial von dem übrigen Lagerring 20 vorsteht. Der Lagerabschnitt 22 ist hohlzylinderförmig ausgebildet, wobei eine durchgehende Lageröffnung 23 zur längsverschieblichen Aufnahme des Grundkörpers 2 dient. Die Lageröffnung 23 weist gemäß dem vorliegenden Ausführungsbeispiel eine von einer Kreisform abweichende Innenkontur auf.

Figur 3 zeigt hierzu eine Schnittdarstellung durch die Lagerung 19 aus Figur 1, mit dem in der Lageröffnung 23 liegenden Grundkörper 12. Die Lageröffnung 23 weist drei über den Umfang gleichmäßig zueinander beabstandet angeordnete Führungsstege 24 auf, die radial nach innen vorstehen und zur linearen Gleitführung des im Querschnitt kreisförmigen Grundkörpers 12 dienen. Durch die Führungsstege 24 oder -rippen verbleibt zwischen den Führungsstegen 24 ein Spalt zwischen Grundkörper 12 und Lagerabschnitt 22, durch welchen Fluid fließen und insbesondere Schmutzpartikel aus dem Lagerbereich herausspülen kann. Dadurch wird verhindert, dass der Grundkörper 12 aufgrund von Verschmutzungen im Fluid beziehungsweise Kühlwasser in der Lagerung 19 verklemmen kann.

Weiterhin weist der Lagerring 20, wie insbesondere in Figuren 2 und 1 gezeigt, mehrere Axialdurchbrüche 25 auf, die beabstandet zu der Lageröffnung 23 ausgebildet sind. Vorliegend sind drei derartige Axialdurchbrüche 25 vorgesehen, die durch entsprechend drei Radialstege 26, die den Lagerabschnitt 22 mit einem sich über den gesamten Außenumfang erstreckenden Stützring 27 verbinden, gebildet werden.

Wie aus Figur 1 weiter ersichtlich, ist zwischen einem der Ventilelemente 13 und dem Lagerring 20 ein erstes Federelement 28, das als Schraubenfeder ausgebildet und koaxial zu dem Grundkörper 12 angeordnet ist, axial vorgespannt gehalten. Das erste Federelement 28 ist dabei dem Ventilelement 13 zugeordnet, das dem ersten Ablaufanschluss 4 zugeordnet ist.

Zwischen dem Lagerring 20 und dem anderen Ventilelement 13 ist ein zweites Federelement 29 vorgespannt gehalten, das ebenfalls als Schraubenfeder ausgebildet und koaxial zu dem Grundkörper 12 angeordnet ist. Im Unterschied zu dem ersten Federelement 28 ist das Federelement 29 jedoch aus einer Formgedächtnislegierung und damit als thermisch aktivierbares Aktuatorelement gefertigt. In Abhängigkeit von seiner Temperatur weist das Federelement 29 somit zwei unterschiedliche maximale Federkräfte auf. Bei niedrigen Temperaturen weist das zweite Federelement 29 eine erste Federkraft auf, die niedriger ist als die Federkraft des Federelements 28. Dadurch schiebt das erste Federelement 28 das Ventil 11 mit dem einen Ventilelement 13 in Richtung des ersten Ablaufanschluss 14, sodass der Dichtring 18 mit dem Gehäuse 2 beziehungsweise Ventilsitz 4' in einer ersten Schiebeendstellung des Ventils 11 eine ringförmige Dichtung bildet, welche den Ablaufanschluss 4 vollständig verschließt, sodass kein Fluid aus dem Ablaufanschluss 4 austreten kann. Stattdessen ist aufgrund der Verschiebung der Ablaufanschluss 5 geöffnet.

Nimmt die Temperatur des zweiten Federelements 29 über einen Grenzwert hinaus zu, so wird die Formgedächtnislegierung aktiviert und das Federelement 29 erhält eine erhöhte zweite Federkraft, die derart gewählt ist, dass sie größer als die Federkraft des ersten Federelements 28. Damit kehrt sich das Kräfteverhältnis am Ventil 11 um, sodass dann das zweite Federelement 29 das Ventil 11 in eine zweite Schiebeendstellung beziehungsweise das ihr zugeordnete Ventilelement 13 gegen den Ventilsitz 5' des Ablaufanschlusses 5 drängt und dadurch den Ablaufanschluss 5 verschließt, während der Ablaufanschluss 4 geöffnet beziehungsweise freigeben wird.

Kühlt die Temperatur des zweiten Federelements 29 wieder unter den ersten Grenzwert ab, oder unter einen zweiten Grenzwert, wenn die Formgedächtnislegierung eine Schalthysterese realisiert, so kehren sich die Kräfteverhältnisse erneut um, und der Ablaufanschluss 4 wird geschlossen und der Ablaufanschluss 5 geöffnet.

Hierdurch ergibt sich eine vorteilhafte Ventileinrichtung 1, die ein einfaches Umschalten in Abhängigkeit von der Temperatur des durch den Zulaufanschluss 3 in das Gehäuse 2 einströmenden Fluids gewährleistet. Reicht die Wärme dazu aus, die Formgedächtnislegierung des Federelements 29 zu aktivieren, so schaltet die Ventileinrichtung 1 um, sodass der Fluidstrom durch den Ablaufanschluss 5 geleitet wird. Ist die Temperatur des Fluids nicht ausreichend, so wird das Fluid durch den Ablaufanschluss 4 geleitet. Dadurch wird das Fluid automatisch unterschiedlichen Kreisläufen in Abhängigkeit seiner Temperatur zugeführt. Dies hat insbesondere Vorteile bei der Verwendung der Ventileinrichtung im Thermomanagement eines Kraftfahrzeugs.

Durch die vorteilhafte Ausbildung der Ventileinrichtung 1 ist das Ventil 11 außerdem als Vormontageeinheit ausgebildet. Zur Vormontage wird der Grundkörper 12 in die Lageröffnung 23 axial eingeschoben, anschließend werden die Federelemente 28 und 29 auf den Lagerabschnitt 22 ausgeschoben. Dabei ist der Lagerabschnitt 22 derartig ausgebildet, dass die Schraubenfedern jeweils auf den Lagerabschnitt 22 aufgeschoben werden können. Der Lagerabschnitt 22 des Lagerrings 20 bildet somit eine Führung für die Schraubenfedern 28, 29. Vorzugsweise weist der Lagerabschnitt dazu an seinen Stirnseiten Zentrierfasen beziehungsweise Einführfasen 30 auf, welche das Aufschieben der Schraubenfedern erleichtern. Die Ventilkörper 14 weisen ebenfalls Führungsabschnitte 31 für die Schraubenfedern auf. Dabei kann der Außendurchmesser des jeweiligen Führungsabschnitts 31 größer oder kleiner als der Innendurchmesser beziehungsweise der Außendurchmesser der jeweiligen Schraubenfeder ausgebildet sein, sodass die Schraubenfeder entweder auf dem Ventilkörper oder in eine Aufnahme des Ventilkörpers eingeschoben wird. In Figur 1 sind beide Ausführungsformen gezeigt, wobei die Schraubenfeder 28 auf den Lagerabschnitt 31 des in der Zeichnung linken Ventilkörpers 14 aufgeschoben ist. Die Schraubenfeder beziehungsweise das Federelement 29 ist hingegen in eine Axialaufnahme des Lagerabschnitts 31 des in der Figur rechten Ventilkörpers 14 eingeführt. In beiden Fällen wird gewährleistet, dass die Schraubenfedern sicher zwischen den Ventilkörpern 14 und dem Lagerring 20 gehalten sind. Insbesondere sind die Schraubenfedern verliersicher an dem Ventil angeordnet.

Nach den Federelementen 28, 29 werden also die Ventilelemente 13 jeweils axial von zwei Seiten auf den Grundkörper 12 aufgeschoben, sodass die Schraubenfedern vorgespannt werden. Durch das Anbringen der Sicherungsringe 15 werden die Ventilelemente 13 an dem Grundkörper 12 entgegen der Kraft der Federelemente 28, 29 axial gesichert. Hierdurch ist die fertige Vormontageeinheit gebildet.

Zur Montage des Ventils 11 in dem Gehäuse 2 wird dieses als die beschriebene Vormontageeinheit einfach axial in die Kammer 7 des Gehäuseelements 6 eingeschoben. Dazu weist das Gehäuseelement 6 an seiner dem Gehäusedeckel 8 zugewandten Seite eine Durchmesservergrößerung auf, durch welche ein Axialanschlag 32 gebildet wird, bis zu welchem der Lagerring 20 in das Gehäuseelement 6 einschiebbar ist. Der Gehäusedeckel 8 ist derart geformt, dass er bei der Anordnung an dem Gehäuseelement 6 den Lagerring 20 ebenfalls axial beaufschlagt, indem sein Innendurchmesser kleiner ist als der Außendurchmesser des Lagerrings 20, wie in Figur 1 gezeigt. Zweckmäßigerweise ist der Lagerring 20 radial in dem Gehäuse verpresst oder zumindest im Wesentlichen spielfrei gehalten. Dadurch ist der Lagerring 20 und damit das gesamte Ventil 11 in der Ventilkammer 10 sicher gehalten und ausgerichtet. Zweckmäßigerweise sind zwischen dem Gehäuseelement 6 und dem Gehäusedeckel 8 ein Axialdichtring 33 angeordnet, durch welchen die Ventilkammer 10 sicher nach außen abgedichtet wird.

Durch die einfache Montage und die kompakte Ausführung der Ventileinrichtung 1 ist diese mit geringen Kosten herstellbar und montierbar. Darüber hinaus wird nur wenig Bauraum benötigt.

## Patentansprüche

1. Ventileinrichtung (1), insbesondere für ein Kühlwassersystem eines Kraftfahrzeugs, mit einem Gehäuse (2), das einen Zulaufanschluss (3) und einen ersten Ablaufanschluss (4) und einen zweiten Ablaufanschluss (5) aufweist, mit einem in dem Gehäuse (2) axial verschiebbar gelagerten Ventil (11), wobei das Ventil (11) einen zylinderförmigen Grundkörper (12) aufweist, an dessen Enden jeweils ein Ventilelement (13) angeordnet ist, um in einer ersten Schiebeendstellung des Ventils (11) einen der Anschlüsse (4,5) und in einer zweiten Schiebeendstellung des Ventils (11) einen anderen der Anschlüsse (5,4) zu verschließen, und mit einem ersten Federelement (28), welches das Ventil (11) in Richtung der ersten Schiebeendstellung vorspannt, und mit einem thermisch aktivierbaren Aktuatorelement, das dazu ausgebildet ist, bei seiner Aktivierung das Ventil (11) entgegen der Kraft des Federelements (28) in Richtung der zweiten Schiebeendstellung zu verschieben, wobei das erste Federelement (28) und das als zweites Federelement (29) ausgebildete Aktuatorelement jeweils zwischen einem der Ventilelemente (13) und einem vom Gehäuse (2) radial nach innen vorstehenden Lagersteg (21) axial verspannt sind, wobei der Lagersteg (21) von einem in das Gehäuse (2) eingesetzten Lagerring (20) gebildet ist, wobei eine Lageröffnung (23) in einem zylinderförmigen und von dem Lagerring (20) axial vorstehenden Lagerabschnitt (22) des Lagerrings (20) ausgebildet ist, und wobei der Lagerabschnitt (22) als Führungsabschnitt für zumindest eine der als Schraubenfedern ausgebildeten Federelemente (28,29), die koaxial zu dem Grundkörper (12) angeordnet sind, ausgebildet ist, **dadurch gekennzeichnet, dass** das Gehäuse (2) aus einem Gehäuseelement (6) und einem Gehäusedeckel (8) besteht, dass das Gehäuseelement (6) an seiner dem Gehäusedeckel (8) zugewandten Seite eine Innendurchmesservergrößerung aufweist, durch welche ein Axialanschlag (32) gebildet wird, bis zu welchem der Lagerring (20) in das Gehäuseelement (6) einschiebbar ist, und dass ein Innendurchmesser des Gehäusedeckels (8) an seiner dem Gehäuseelement (6) zugewandten Seite kleiner ist als der Außendurchmesser des Lagerrings (20), sodass der Gehäusedeckel (8) bei der Anordnung an dem Gehäuseelement (6) den Lagerring (20) ebenfalls axial beaufschlagt.

2. Ventileinrichtung nach Anspruch 1, **dadurch gekennzeichnet, dass** der Lagerring (20) zusammen mit dem Ventil (11) als Vormontageeinheit ausgebildet ist.

3. Ventileinrichtung nach einem der vorhergehenden Ansprüche, **dadurch gekennzeichnet, dass** die Lageröffnung (23) mindestens zwei, insbesondere drei oder mehr radial nach innen vorstehende und in Umfangsrichtung voneinander beabstandet angeordnete Führungsstege (24) für den Grundkörper (12) aufweist.

4. Ventileinrichtung nach einem der vorhergehenden Ansprüche, **dadurch gekennzeichnet, dass** der Lagerring (20) wenigstens einen Axialdurchbruch (25) beabstandet zu der Lageröffnung (23) aufweist.

5. Ventileinrichtung nach einem der vorhergehenden Ansprüche, **dadurch gekennzeichnet, dass** der Lagerring (20) an seinem Außenumfang einen durchgehenden Stützring (27) zur Lagerung in dem Gehäuse (2) aufweist.

6. Ventileinrichtung nach einem der vorhergehenden Ansprüche, **gekennzeichnet durch** zwei Ventilkörper (14), die jeweils ein elastisch verformbares Dichtelement, insbesondere einen Dichtring (18) aufweisen.

7. Ventileinrichtung nach Anspruch 6, **dadurch gekennzeichnet, dass** einer der Ventilkörper (14) dem ersten Ablaufanschluss (4) und der andere der Ventilkörper (14) dem zweiten Ablaufanschluss (5) zugeordnet ist.

8. Ventileinrichtung nach einem der vorhergehenden Ansprüche, **dadurch gekennzeichnet, dass** das Gehäuse (2) T-förmig ausgebildet ist, wobei der Zulaufanschluss (3) zwischen, insbesondere mittig zwischen den Ablaufanschlüssen (4,5) in das Gehäuse (2) mündet.

9. Ventileinrichtung nach einem der vorhergehenden Ansprüche, **dadurch gekennzeichnet, dass** das zweite Federelement (29) aus einer Formgedächtnislegierung gefertigt ist.

## Claims

1. A valve device (1), in particular for a cooling water system of a motor vehicle, comprising a housing (2), which has an inflow connection (3) and a first outflow connection (4) and a second outflow connection (5), comprising a valve (11), which is mounted in the housing (2) so as to shift, wherein the valve (11) has a cylindrical main part (12), at each end of which a valve element (13) is arranged in order to close one of the connections (4, 5) in a first sliding end position of the valve (11) and another of the connections (5, 4) in a second sliding end position of the valve (11), and comprising a first spring element (28), which biases the valve (11) in the direction of the first sliding end position, as well as a thermally activatable actuator element, which is designed to push the valve (11) against the force of the spring element (28) in the direction of the second sliding end position upon being activated, wherein the first spring element (28) and the actuator element formed as a second spring element (29) are each axially tensioned between one of the valve elements (13) and a bearing web (21) protruding from the housing (2) inward radially, wherein the bearing web (21) is formed by a bearing ring (20) inserted into the housing (2), wherein a bearing opening (23) is formed in a cylindrical and from the bearing ring (20) axially protruding bearing section (22) of the bearing ring (20), and wherein the bearing section (22) is formed as a guide section for at least one of the spring elements (28, 29) formed as helical springs, which are arranged coaxially with respect to the main part (12), **characterized in that** the housing consists of a housing element (6) and a housing cover (8), that the housing element (6) has a diameter increase on its side facing the housing cover (8), by means of which an axial stop (32) is formed, up to which the bearing ring (20) can be pushed into the housing element (6), and that an inner diameter of the housing cover (8) on its side facing the housing element (6) is less than the outer diameter of the bearing ring (20), such that the housing cover (8) with the arrangement on the housing element (6) likewise axially impacts the bearing ring (20).

2. The valve device according to claim 1, **characterized in that** the bearing ring (20), together with the valve (11), is formed as a preassembled unit.

3. The valve device according to any of the preceding claims, **characterized in that** the bearing opening (23) has at least two, particularly three, or more guide bars (24) for the main part (12), which protrude radially inwards and are arranged apart from one another in the circumferential direction.

4. The valve device according to any of the preceding claims, **characterized in that** the bearing ring (20) has at least one axial opening (25) spaced apart from the bearing opening (23).

5. The valve device according to any of the preceding claims, **characterized in that** the bearing ring (20) has a continuous support ring (27) on its exterior periphery for mounting in the housing (2).

6. The valve device according to any of the preceding claims, **characterized by** two valve bodies (14), each comprising an elastically deformable sealing element, particularly a sealing ring (18).

7. The valve device according to claim 6, **characterized in that** one of the valve bodies (14) is assigned to the first outflow connection (4) and the other of the valve bodies (14) is assigned to the second outflow connection (5).

8. The valve device according to any of the preceding claims, **characterized in that** the housing (2) is formed in a T-shape, wherein the inflow connection (3) exits between, particularly in the middle between, the outflow connections (4, 5) into the housing (2).

9. The valve device according to any of the preceding claims, **characterized in that** the second spring element (29) is made from a shape-memory alloy.

## Revendications

1. Dispositif de soupape (1), en particulier pour un système d'eau de refroidissement d'un véhicule automobile, avec un boîtier (2) qui présente un raccord d'entrée (3) et un premier raccord de sortie (4) et un deuxième raccord de sortie (5), avec une soupape (11) logée dans le boîtier (2) de manière à pouvoir coulisser axialement, la soupape (11) présentant un corps de base (12) de forme cylindrique, aux extrémités duquel est disposé respectivement un élément de soupape (13), pour fermer, dans une première position finale de coulissement de la soupape (11), l'un des raccords (4,5) et, dans une deuxième position finale de coulissement de la soupape (11), un autre des raccords (5,4), et avec un premier élément de ressort (28) qui précontraint la soupape (11) en direction de la première position finale de coulissement, et avec un élément d'actionneur activable thermiquement qui est conçu pour, lors de son activation, faire coulisser la soupape (11) à l'encontre de la force de l'élément de ressort (28) en direction de la deuxième position finale de coulissement, le premier élément de ressort (28) et l'élément d'actionneur conçu comme deuxième élément de ressort (29) étant respectivement serrés axialement entre l'un des éléments de soupape (13) et une nervure de palier (21) faisant saillie radialement vers l'intérieur du boîtier (2), la nervure de palier (21) étant formée par une bague de palier (20) insérée dans le boîtier (2), une ouverture de palier (23) étant formée dans une section de palier (22) de la bague de palier (20) de forme cylindrique et faisant saillie axialement de la bague de palier (20), et la section de palier (22) étant conçue comme section de guidage pour au moins l'un des éléments de ressort (28,29) conçus comme des ressorts hélicoïdaux, qui sont disposés coaxialement au corps de base (12), **caractérisé en ce que** le boîtier (2) est constitué d'un élément de boîtier (6) et d'un couvercle de boîtier (8), **en ce que** l'élément de boîtier (6) présente, sur son côté tourné vers le couvercle de boîtier (8), un agrandissement du diamètre intérieur par lequel est formée une butée axiale (32) jusqu'à laquelle la bague de palier (20) peut être insérée dans l'élément de boîtier (6), et **en ce qu'**un diamètre intérieur du couvercle de boîtier (8) est plus petit sur son côté tourné vers l'élément de boîtier (6) que le diamètre extérieur de la bague de palier (20), de sorte que le couvercle de boîtier (8) sollicite également axialement la bague de palier (20) lorsqu'il est disposé sur l'élément de boîtier (6).

2. Dispositif de soupape selon la revendication 1, **caractérisé en ce que** la bague de palier (20) est conçue, conjointement avec la soupape (11), comme une unité de prémontage.

3. Dispositif de soupape selon l'une des revendications précédentes, **caractérisé en ce que** l'ouverture de palier (23) présente au moins deux, en particulier trois ou plus, nervures de guidage (24) pour le corps de base (12), qui font saillie radialement vers l'intérieur et sont disposées à distance les unes des autres dans la direction circonférentielle.

4. Dispositif de soupape selon l'une des revendications précédentes, **caractérisé en ce que** la bague de palier (20) présente au moins un passage axial (25) espacé de l'ouverture de palier (23).

5. Dispositif de soupape selon l'une des revendications précédentes, **caractérisé en ce que** la bague de palier (20) présente sur sa périphérie extérieure une bague d'appui (27) continue pour le logement dans le boîtier (2).

6. Dispositif de soupape selon l'une des revendications précédentes, **caractérisé par** deux corps de soupape (14) présentant chacun un élément d'étanchéité élastiquement déformable, notamment une bague d'étanchéité (18).

7. Dispositif de soupape selon la revendication 6, **caractérisé en ce que** l'un des corps de soupape (14) est associé au premier raccord de sortie (4) et l'autre des corps de soupape (14) est associé au deuxième raccord de sortie (5).

8. Dispositif de soupape selon l'une des revendications précédentes, **caractérisé en ce que** le boîtier (2) est en forme de T, le raccord d'entrée (3) débouchant dans le boîtier (2) entre, notamment au milieu entre les raccords de sortie (4,5).

9. Dispositif de soupape selon l'une des revendications précédentes, **caractérisé en ce que** le deuxième élément de ressort (29) est fabriqué en un alliage à mémoire de forme.
